Europäisches Patentamt

European Patent Office

Office européen des brevets

(19)

(11) Publication number: **0 160 411 B1**

# EUROPEAN PATENT SPECIFICATION

(12)

(45) Date of publication of patent specification: **28.08.91**  (51) Int. Cl.⁵: **H04M 19/08**, H04M 19/00

(21) Application number: 85302304.2

(22) Date of filing: 02.04.85

(54) Line feed circuit for a digital signal loop.

(30) Priority: 30.04.84 US 605556

(43) Date of publication of application:
06.11.85 Bulletin 85/45

(45) Publication of the grant of the patent:
28.08.91 Bulletin 91/35

(84) Designated Contracting States:
AT DE FR GB NL SE

(56) References cited:
FR-A- 2 441 303

WESCOM 83, vol. 27, 1983, paper 15/1, pages
1-5; P. MEZA: "Advanced generation inte-
grated SLIC"

IEEE THE INTERNATIONAL SYMPOSIUM ON
SUBSCRIBER LOOPS AND SERVICES, Atlan-
ta, Georgia, 20th-24th March 1978, pages
190-194, IEEE, New York, US; G.N. LAWRENCE
et al.: "Digital service to the subscriber"

IBM TECHNICAL DISCLOSURE BULLETIN, vol.
25, no. 11A, April 1983, pages 5798,5799, New
York, US; D. BALLATORE: "Two-slope resis-
tive feeder for telephone line interface cir-
cuits"

(73) Proprietor: **NORTHERN TELECOM LIMITED**
**1600 Dorchester Boulevard West**
**Montreal Quebec H3H 1R1(CA)**

(72) Inventor: **Hingston, Joseph William**
**801 J West California Street**
**Sunnyvale California 94086(US)**
Inventor: **Urbach, Stephen Thomas**
**816 Harliss Avenue**
**San Jose California 95110-3010(US)**

(74) Representative: **Crawford, Andrew Birkby et al**
**A.A. THORNTON & CO. Northumberland**
**House 303-306 High Holborn**
**London WC1V 7LE(GB)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

## Description

The invention is in the field of line feed circuits for supplying energizing direct current for operation of a telephone line and a telephone station apparatus. More particularly the invention pertains to a line feed circuit for a digital signal loop.

Telephone networks have traditionally been provided by analog facilities for providing voiceband communication between associated telephone station sets. More recently advancements in electronic technology have encouraged widespread development and installation of digital signal facilities wherein voiceband communications are provided by digital signal encoded representations of analog signals. It has therefore become attractive to make better use of the inherent advantages of these digital signal facilities by also providing digital signal telephone station sets for use in association with such facilities. A digital signal telephone station set must include at least all of the functions of its analog predecessor namely those of transmitting message information, receiving message information, transmitting supervisory signalling, receiving supervisory signalling and being energized for operation from a private branch exchange (PBX) or a central office (CO) located battery. At first each of the functions required a separate pair of conductors in a telephone line connection between the digital station set and the associated telephone facility. More recently however, time compression signal multiplexing techniques, often referred to as ping-pong transmission, has been developed to reduce the conductor requirements to a single pair, similar to that used for analog station sets.

In the case of an analog station set, a line circuit includes an AC interface for coupling voiceband signals between the telephone line and the associated telephone facility, and a DC feed for supplying energizing current via the telephone line for operation of the analog station set. One example of such a line circuit is that disclosed by V.V. Korsky in U.S. Patent No. 4,103,112 issued on 25 July, 1978 and entitled: "Telephone Line Circuit with Differential Loop Current Sensing and Compensation".

In this example AC signals are transformer coupled with the associated switching facility and DC energizing current is supplied via a pair of 200 ohm tip and ring feed resistors. The feed resistors are used to limit direct current flow in the case where the telephone line is rather short and to prevent serious damage in the event of a fault connection with either of the tip and ring leads of the telephone line. The use of 200 ohm feed resistors does exact a penalty in that some power loss is suffered. In most cases the power loss is in a range of between about a fifth of a watt and one watt, however in the case of a very short telephone line the power loss may approach four watts. In a typical telephone facility this power loss is not of serious consequence. At any one time seldom more than one quarter of the associated analog telephone station sets are in the OFF HOOK state drawing energizing current.

In contrast, in the case of digital signal station sets, ON HOOK and OFF HOOK states are of no conseqence. A typical digital signal station set draws substantially the same energizing current all of the time that it is connected to a telephone line. Hence if a telephone facility is equipped with digital signal station sets, supplied with energizing current by conventional feed resistors or equivalent means the power requirements and accompanying generated heat are of serious consequence.

One solution to this problem has been to use a much lower value of feed resistance thereby reducing power dissipation in the area of the line circuits to a more reasonable level. However, this solution carries with it the disadvantage of requiring very much higher power dissipation capability in the feed resistors to prevent damage in the event of a power line cross or a ground fault condition on the telephone line. On the other hand if a resistor with inadequate heat dissipation capability is used, physical separation and special mounting are required to reduce the likelihood of damage to adjacent components in the event of a fault causing a catastrophic failure.

The requirements for a system in which all-digital subscribers' instruments may be used are discussed in a paper "Digital Service to the Subscriber" by G. N. Lawrence and A. E. Shuttleworth (IEEE, The International Symposium on Subscriber Loops and Services, Atlanta, Georgia, 20th - 24th March 1978, pages 190-194). Figure 3 of the paper illustrates a possible power feeding arrangement using a subscriber line interface circuit incorporating a transformer for coupling speech signals between the subscriber line and a communications facility which is beyond the interface circuit (as in the pre-characterising portion of claim 1).

In the above-mentioned paper there is no mention of the detailed structure of the power feeding components in the illustrated line feed circuit. In particular, there is no discussion of how to accommodate the different power feed requirements of subscriber lines of different lengths nor of how to deal with fault connections to either of the tip and ring leads of the telephone line.

### Summary of the Invention

Itis an object of the invention to supply energizing current from a central power source in a communication facility, by way of a line feed circuit, to a digital signal terminal apparatus while minimizing power dissipation in the line feed circuit.

It is also an object of the invention to supply the energizing current up to a predetermined limit using the same two wire communication line as is used for transmission of digital signals between the terminal apparatus and the communication facility.

A line feed circuit in accordance with the invention includes power and grounds terminals for connection to the power source and tip and ring terminals for connection to the communication line. An alternating current coupling circuit includes a capacitor and a transformer. The transformer includes a primary winding for connection to interface circuitry for the communication system and also includes tip and ring windings. The tip and ring windings are connected in series with the tip and ring terminals respectively and the capacitor is connected between the tip and ring windings. A direct current coupling circuit includes a current limiting circuit being connected in series between the power terminal and a junction of the capacitor and one of the tip and ring windings. Another junction of the capacitor and another of the tip and ring windings is connected to the ground terminal.

The current limiting circuit in combination with the tip and ring windings provide a current path between the power terminals and the two-wire communication line. In accordance with the invention the current path is operated in an unrestricted mode to supply an energizing current flow to the communication line, while the energizing current flow is of less than a predetermined limit. In the event that the energizing current flow increases to a predetermined limit, the current path is operated in a restricted mode to restrain the energizing current flow at the predetermined limit.

Brief Description of the Drawings

An example embodiment of a line feed circuit, in accordance with the invention, is described with reference to the accompanying drawings in which:
Figure 1 is a schematic diagram of the line feed circuit and part of an associated station set connected by way of a telephone line; and
Figure 2 is a graphical representation of resistances corresponding to various flows of energizing current in a current path, in the line feed circuit in figure 1.

Description of the Example Embodiment

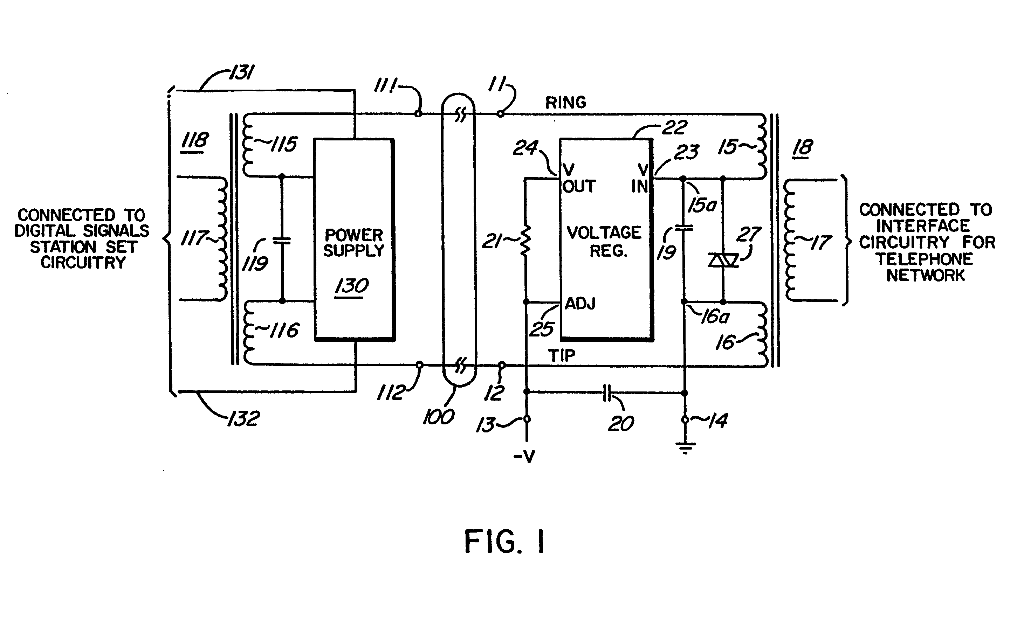

Referring to Figure 1, a twisted pair telephone line 100 is connected between tip and ring terminals 12 and 11 of a line feed circuit, and tip and ring terminals 112 and 111 of part of a remotely located terminal apparatus or station set.

The remotely located station set includes a transformer 118, having a primary winding 117 connected to digital circuitry, not shown, and tip and ring windings 116 and 115 connected in series with a capacitor 119 between the tip and ring terminals 112 and 111. The transformer 118 performs two functions. One of the functions is that of coupling digital type information signals, for example bipolar encoded signals often referred to as alternate mark inverted (AMI) signals, between the station set digital circuitry and the telephone line 100. The other of the two functions is that of providing metallic direct current paths between the tip and ring terminals 112 and 111 and a power supply 130, by way of the tip and ring windings 116 and 115. The power supply 130 responds to energizing current conducted by the current paths by providing power at a predetermined potential across power leads 131 and 132 for operation of the station set.

The line feed circuit includes a transformer having a primary winding 17, a tip winding 16 and a ring winding 15. A capacitor 19 is connected at junctions 15a and 16a in series between the ring and tip windings 15 and 16. The line feed circuit also includes power terminals 13 and 14 for connection to a negative voltage supply and ground respectively. The junction 16a is connected to the power terminal 14. A capacitor 20 is connected between the power terminals 13 and 14. A voltage regulator 22, is provided in this example by an integrated circuit identified by circuit number LM317. The voltage regulator 22 includes a voltage input port V in at 23, a voltage output port V out at 24 and a control port or adjust electrode ADJ at 25. The adjust electrode is connected to the power terminal 13. The voltage input Port V in is connected to the junction 15a. A feed resistor 21 is connected between the power terminal 13 and the voltage output port V out. A varistor 27, having a greater conduction voltage drop characteristic than voltage intended across the power terminals 13 and 14, is connected between the tip and ring windings 16 and 15.

In operation the line feed circuit provides two circuit functions, that of an alternating current coupling circuit and that of a direct current coupling circuit. Alternating current, representative of the previously mentioned AMI signals, is transformer coupled between the tip and ring terminals 12 and 11, and interface circuitry not shown, for an associated telephone network, also not shown. The interface circuitry alternately transmits a burst of AMI signals representative of binary signals from the telephone network via the primary, tip and ring windings 17, 16, and 15 and the capacitor 19. Subsequently in accordance with typical time compression multiplex operation the interface circuit receives a burst of AMI signals via the above-mentioned circuit elements.

Energizing direct current for operation of the remote station set is supplied by direct current paths between the power terminals and the tip and ring terminals. One direct current path between the tip terminal 12 and the power terminal 14 is provided by the tip winding 16. The other direct current path between the ring terminal 11 and the power terminal 13 is provided by the ring winding 15, the voltage regulator 22 and the feed resistor 21, the voltage regulator 22 and the feed resistor 21 being connected in the configuration shown, as a current limiting circuit. One of the operating characteristics of the LM317 type voltage regulator is that of limiting current flow such that a 1.2 volt difference is maintained between the voltage output port V out at 24 and the control port ADJ at 25. If however insufficient current is drawn by the power supply 130 to develop the required 1.2 volts across the feed resistor 21, the LM317 voltage regulator operates in a saturated mode. In the saturated mode current flow via V out and V in is unrestricted except for the normal forward saturation voltage drop of the regulator. Forward saturation voltage drops in a range of 2.7 volts and 1.8 volts are typical for current flows in a range of about 55 milliamperes. In the case where the feed resistor 21 is of a resistance of twenty ohms, the voltage regulator operates in a linear mode with a current flow of about 60 milliamperes. In the linear mode, current flow via V out and V in is restricted, with the voltage regulator sustaining such voltage drop between the ports V out and V in as is in accordance with maintaining the 1.2 volt potential difference across the feed resistor 21.

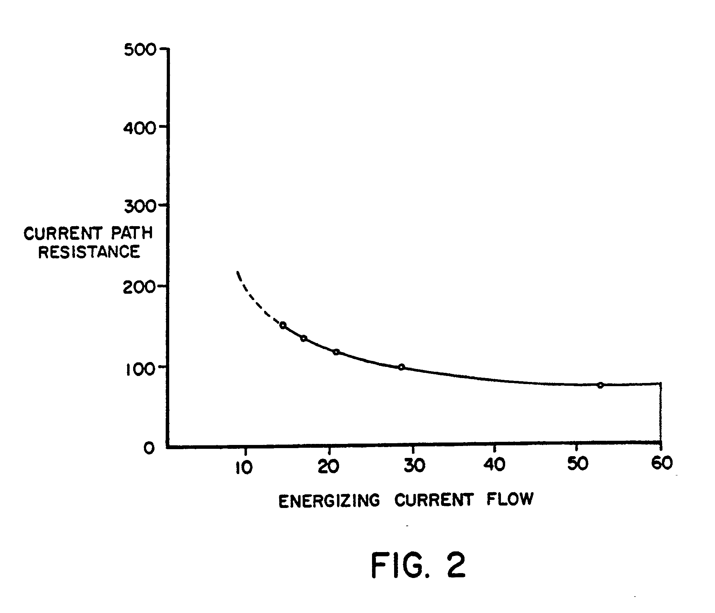

In this example the potential at the power terminal is about minus 30 volts. Normally in operation, the power supply 130 draws less than 60 milliamperes and the current limiting circuit, provided by the voltage regulator 22 and the resistor 21, operates in the unrestricted mode. This is illustrated in the graph in Figure 2 where resistance is represented in ohms on a vertical axis and energizing current flow is represented in milliamperes on a horizontal axis. A curve representing resistance of the current limiter operating in the saturated or unrestricted mode is approximated along five plots of measurements taken during operation of the line feed circuit. In the unrestricted mode the curve demonstrates that as energizing direct current increases, the resistance of the current path advantageously decreases, that is until a limit of 60 milliamperes is reached. Thus in normal operation minimal power typically less than about 160 milliwatts is dissipated in the line feed circuit. Only in the extreme fault case of a short circuit between the tip and ring leads or in the power supply 130 will significant power be dissipated in the line feed circuit. In this particular example the maximum power dissipation is about 1.8 watts in the presence of a direct short circuit between the tip and ring terminals 12 and 11.

Use of line feed circuits and methods as described in the foregoing and as defined in any of the following claims provides for a substantial reduction in power dissipation as compared to passive resistance line feed arrangements for digital signal station sets and terminals. Attendant economies in packing density and reduction of power supply size are envisaged.

## Claims

1. A line feed circuit for supplying energizing direct current for operation of a remote terminal apparatus being connected by way of a two-wire communication line (100), and for coupling digital signals between the communication line and an associated communication facility, the line feed circuit including:

   tip and ring terminals (12, 11) for connection to the communication line;

   an alternating current coupling circuit including, a transformer (18) having a primary winding (17) and tip and ring windings (16, 15), the tip and ring windings being connected in series with each of the tip and ring terminals respectively, and a capacitor (19) being connected in series between the tip and ring windings for conducting alternating current therebetween; and power and ground terminals (13, 14) being connected across the capacitor (20);

   the line feed circuit being characterised by a current limiting circuit (21, 22) being connected in series between the power terminal (13) and the capacitor (20), whereby in operation direct energizing current of up to a predetermined limit is available for operation of the remote terminal apparatus via the tip and ring terminals.

2. A line feed circuit as defined in claim 1 wherein the current limiting circuit comprises:

   a feed resistor (21) and a voltage regulator (22), the voltage regulator having an input port (23), an output port (24), and a control port (25), and being connected via the input and control ports between the power terminal and one junction (15a), the feed resistor being connected in series between the control and output ports, for conducting the energizing current.

3. A line feed circuit as defined in claim 1 wherein the one junction (15a) is defined by the connection of the capacitor (19) and an end of the ring winding remote from the ring terminal, and the other junction (16a) is defined by the connection of the capacitor (19) and an end of the tip winding remote from the terminal.

4. A line feed circuit as defined in claim 3 wherein the current limiting circuit is characterised by

a feed resistor (21) and a voltage regulator (22), the voltage regulator having an input port (23), an output port (24), and a control port (25), and being connected via the input and control ports between the power terminal and the capacitor, and the feed resistor being connected in series between the control port and the output port.

5. A line feed circuit as defined in claim 3 wherein the power terminal is for connection to a negative voltage terminal (-V) of the power source and wherein the current limiting circuit comprises:

a feed resistor (21) and a voltage regulator (22), the voltage regulator having an input port (23) being connected to said one junction, a control port (25) being connected to the power terminal and an output port (24) being connected in series with the feed resistor to the power terminal, the voltage regulator being operable in a linear mode to restrict a flow of the energizing current through the feed resistor at the predetermined limit, and otherwise being operable in a saturation mode whereby the flow of energizing current at less than the predetermined limit is substantially unrestricted.

6. A method for supplying energizing current from a central power source in an associated communications facility to a power supply (130) in a digital signal terminal being located remote from the communications facility and being connected thereto by way of a two-wire communication line (100), comprising the step of:

a) providing a current path between the central power source and the communication line; characterised by further comprising the steps of:

b) operating the current path in an unrestricted mode to supply an energizing current flow to the communication line while the energizing current flow is of less than a predetermined limit; and

c) operating the current path in a restricted mode to supply the energizing current flow to the communication line while the energizing current flow corresponds to the predetermined limit;

whereby in step (b) energy dissipation in the current path is minimized and in step (c) excess current flow is restrained.

7. A method as defined in claim 6 wherein the current path is provided by a feed resistor (21) and a semiconductor device (22) arranged in a series combination and wherein in step (c) operation occurs in the semiconductor device in response to a voltage drop across the feed resistor which corresponds to the current flow being of the predetermined limit.

**Revendications**

1. Circuit d'alimentation de ligne pour délivrer un courant continu d'alimentation pour le fonctionnement d'un appareil terminal distant étant relié au moyen d'une ligne de communication à deux fils (100), et pour le couplage de signaux numériques entre la ligne de communication et une installation de communication associée, le circuit d'alimentation de ligne comportant :

des bornes de fil T et de fil R (12, 11) pour le raccordement à la ligne de communication ;

un circuit de couplage à courant continu comportant, un transformateur (18) ayant un enroulement primaire (17) et des enroulements de fils T et de fils R (16, 15), les enroulements de fils T et de fils R étant connectés en série à chacune des bornes de fils T et de fils R respectivement, et un condensateur (19) étant connecté en série entre les enroulements de fils T et de fils R pour la conduction du courant alternatif entre eux ; et des bornes d'alimentation et de terre (13, 14) étant connectées aux bornes du condensateur (20) ;

le circuit d'alimentation de ligne étant caractérisé par un circuit de limitation de courant (21, 22) qui est connecté en série entre la borne d'alimentation (13) et le condensateur (20), permettant de ce fait qu'un courant d'alimentation continu en fonctionnement jusqu'à une limite prédéterminée soit disponible pour le fonctionnement de l'appareil terminal distant par l'intermédiaire des bornes de fils T et de fils R.

2. Circuit d'alimentation de ligne selon la revendication 1, dans lequel le circuit de limitation de courant comprend :

une résistance d'alimentation (21) et un régulateur de tension (22), le régulateur de tension ayant un point d'accès d'entrée (23), un point d'accès de sortie (24) et un point d'accès de commande (25), et étant connecté via les points d'accès d'entrée et de commande entre la borne d'alimentation et un point de jonction (15a), la résistance d'alimentation étant connectée en série entre les points d'accès de commande et de sortie, pour conduire le courant d'alimentation.

3. Circuit d'alimentation de ligne selon la revendication 1, dans lequel la première jonction (15a) est définie par la connexion du condensateur (13) et une extrémité de l'enroulement du fil R distant de la borne du fil R, et l'autre point jonction (16a) est défini par la connexion du condensateur (19) et une extrémité de l'enroulement du fil T distant de la borne.

4. Circuit d'alimentation de ligne selon la revendication 3, dans lequel le circuit de limitation de courant est caractérisé par

une résistance d'alimentation (21) et un régulateur de tension (22), le régulateur de tension ayant un point d'accès d'entrée (23), un point d'accès de sortie (24) et un point d'accès de commande (25), et étant connecté via les points d'accès d'entrée et de commande entre la borne d'alimentation et le condensateur, et la résistance d'alimentation étant connectée en série entre le point d'accès de commande et le point d'accès de sortie.

5. Circuit d'alimentation de ligne selon la revendication 3, dans lequel la borne d'alimentation est destinée à la connexion d'une borne de tension négative (-V) de la source d'alimentation et dans lequel le circuit de limitation de courant comprend :

une résistance d'alimentation (21) et un régulateur de tension (22), le régulateur de tension ayant un point d'accès d'entrée (23) qui est connecté au premier point de jonction, un point d'accès de commande (25) qui est connecté à la borne d'alimentation et un point d'accès de sortie (24) qui est connecté en série avec la résistance d'alimentation à la borne d'alimentation, le régulateur de tension pouvant fonctionner dans un mode linéaire pour limiter une intensité du courant d'alimentation à travers la résistance d'alimentation à la limite prédéterminée, et autrement pouvant fonctionner dans un mode de saturation permettant à l'intensité du courant d'alimentation inférieure à la limite prédéterminée soit pratiquement non limitée.

6. Procédé pour délivrer le courant d'alimentation depuis une source d'alimentation centrale dans une installation de communication associée vers une alimentation en puissance (130) dans un terminal à signaux numériques qui est situé distant de l'installation de communication et qui est connecté à celui-ci au moyen d'une ligne de communication à deux fils (100) comprenant l'opération consistant à :

a) assurer un trajet de courant entre la source d'alimentation centrale et la ligne de communication ;

caractérisé par les opérations supplémentaires consistant à :

b) mettre en oeuvre le trajet du courant dans un mode non limité afin de délivrer une intensité de courant d'alimentation vers la ligne de communication tandis que l'intensité du courant d'alimentation est inférieure à une limite prédéterminée ; et

c) mettre en oeuvre le trajet du courant en mode limité pour délivrer l'intensité du courant d'alimentation vers la ligne de communication tandis que l'intensité du courant d'alimentation correspond à la limite prédéterminée ;

permettant de ce fait que dans l'opération (b) la dissipation d'énergie dans le trajet du courant soit minimalisée et dans l'opération (c) l'intensité du courant en excès soit limitée.

7. Procédé selon la revendication 6, dans lequel le trajet du courant est assuré par une résistance d'alimentation (21) et un dispositif semiconducteur (22) disposé en une combinaison série et dans lequel dans l'opération (c) le fonctionnement se produit dans le dispositif à semi-conducteur en réponse à une chute de tension aux bornes de la résistance d'alimentation qui correspond à l'intensité du courant qui est à la limite prédéterminée.

**Patentansprüche**

1. Leitungsspeiseschaltung zum Zuführen von Beaufschlagungs-Gleichstrom zum Betrieb einer fernliegenden Endgerätevorrichtung, die über eine Zweidraht-Nachrichtenverbindungsleitung (100) angeschlossen ist und zum Koppeln von Digitalsignalen zwischen der Nachrichtenverbindungsleitung und einer zugeordneten Nachrichtenverbindungsanlage, wobei die Leitungsspeiseschaltung enthält:

Spitzen- und Ringklemmen (12, 11) zur Verbindung mit der Nachrichtenverbindungsleitung;

eine Wechselstrom-Kopplungsschaltung mit einem Transformator (18) mit einer Primärwicklung (17) und Spitzen- und Ringwicklungen (16, 15), wobei die Spitzen- und Ringwicklungen in Reihe mit den jeweiligen Spitzen- und Ringklemmen angeschlossen sind, und ein Kondensator (19) in Reihe zwischen den Spitzen- und Ringwicklungen angeschlossen ist, um Wechselstrom zwischen diesen zu leiten; und Leitungs- und Erdklemmen (13, 14), die über den Kondensator (20) angeschlossen sind,

wobei die Leitungsspeiseschaltung gekennzeichnet ist durch eine Strombegrenzungsschaltung (21, 22), die in Reihe zwischen der Leistungsklemme (13) und dem Kondensator (20) angeschlossen ist, wodurch im Betrieb Beaufschlagungs-Gleichstrom bis zu einem vorbestimmten Grenzwert zum Betrieb der fernliegenden Endstellenvorrichtung über die Spitzen- und Ringklemmen verfügbar ist.

2. Leitungsspeiseschaltung nach Anspruch 1, bei der die Strombegrenzungsschaltung umfaßt:

einen Speisewiderstand (21) und einen Spannungsregler (22), wobei der Spannungsregler einen Eingangsanschluß (23), einen Ausgangsanschluß (24) und einen Steueranschluß (25) besitzt und über den Eingangs- und den Steueranschluß zwischen der Leistungsklemme und einer Verbindungsstelle (15a) angeschlossen ist und der Speisewiderstand zum Leiten des Beaufschlagungsstromes in Reihe zwischen dem Steuer- und dem Ausgangsanschluß angeschlossen ist.

3. Leitungsspeiseschaltung nach Anspruch 1, bei der die eine Verbindungsstelle (15a) durch die Verbindung des Kondensators (13) mit einem von der Ringklemme abgelegenen Ende der Ringwicklung bestimmt ist und die andere Verbindungsstelle (16a) durch die Verbindung des Kondensators (19) mit einem der Klemme abgelegenen Ende der Spitzenwicklung bestimmt ist.

4. Leitungsspeiseschaltung nach Anspruch 3, bei der der Strombegrenzungskreis gekennzeichnet ist durch

einen Speisewiderstand (21) und einen Spannungsregler (22), wobei der Spannungsregler einen Eingangsanschluß (23), einen Ausgangsanschluß (24) und einen Steueranschluß (25) besitzt und über den Eingangs- und den Steueranschluß zwischen der Leistungsklemme und dem Kondensator angeschlossen ist, und der Speisewiderstand in Reihe zwischen dem Steueranschluß und dem Ausgangsanschluß angeschlossen ist.

5. Leitungsspeiseschaltung nach Anspruch 3, bei der die Leistungsklemme zur Verbindung mit einer negativen Spannungsklemme (-V) der Leitungsquelle bestimmt ist und die Strombegrenzungsschaltung umfaßt:

einen Speisewiderstand (21) und einen Spannungsregler (22), wobei der Spannungsregler einen mit der einen Verbindungsstelle verbundenen Eingangsanschluß (23), einen mit der Leistungsklemme verbundenen Steueranschluß (25) und einen in Reihe mit dem Speisewiderstand mit der Leistungsklemme verbundenen Ausgangsanschluß (24) besitzt, der Spannungsregler in einem Linearmodus betreibbar ist zum Begrenzen eines Beaufschlagungsstromflusses durch den Speisewiderstand an dem vorbestimmten Grenzwert und sonst in einem Sättigungsmodus betreibbar ist, wodurch der Beaufschlagungsstromfluß mit weniger als dem vorbestimmten Grenzwert im wesentlichen unbeschränkt ist.

6. Verfahren zum Zuführen von Beaufschlagungsstrom von einer zentralen Leistungsquelle in einer zugeordneten Nachrichtenverbindungsanlage zu einer Leistungsversorung (130) in einem Digitalsignal-Endgerät, das entfernt von der Nachrichtenverbindungsanlage angeordnet und damit über eine Zweidraht-Nachrichtenverbindungsleitung (100) verbunden ist, mit den Schritten:
   a) es wird ein Stromweg zwischen der zentralen Leistungsquelle und der Nachrichtenverbindungsleitung geschaffen;

   gekennzeichnet durch die weiteren Schritte:
   b) der Stromweg wird in einem unbeschränkten Modus betrieben zum Zuführen eines Beaufschlagungs-Stromflusses zu der Nachrichtenverbindungsleitung, solange der Beaufschlagungsstromfluß geringer als ein vorbestimmter Grenzwert ist; und
   c) der Stromweg wird in einem beschränkten Modus betrieben zum Zuführen des Beaufschlagungsstromflusses zu der Nachrichtenverbindungsleitung, wenn der Beaufschlagungsstromfluß dem vorbestimmten Grenzwert entspricht;

wodurch im Schritt b) die Verlustleistung im Stromweg klein gehalten und im Schritt c) übermäßiger Stromfluß begrenzt wird.

7. Verfahren nach Anspruch 6, bei dem der Stromweg aus einen Speisewiderstand (21) und ein Halbleiterbauelement (22) besteht, die in Serienschaltung angeordnet sinda und bei dem im Schritt c) der Betrieb in dem Halbleitergerät in Abhängigkeit von einem Spannungsabfall über dem Speisewiderstand erfolgt, der dem Stromfluß bei dem vorbestimmten Grenzwert entspricht.

CONNECTED TO
DIGITAL SIGNALS
STATION SET
CIRCUITRY

CONNECTED TO
INTERFACE
CIRCUITRY FOR
TELEPHONE
NETWORK

RING

VOLTAGE
REG.

POWER
SUPPLY

TIP

-V

FIG. I

EP 0 160 411 B1

9

FIG. 2